(19) Europäisches Patentamt
European Patent Office
Office européen des brevets

(11) Veröffentlichungsnummer: **0 354 401**
**A1**

(12) **EUROPÄISCHE PATENTANMELDUNG**

(21) Anmeldenummer: **89113565.9**

(51) Int. Cl.4: **C02F 1/52 , C02F 1/56**

(22) Anmeldetag: **24.07.89**

(30) Priorität: **26.07.88 DE 3825281**

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **Albert, Alfred**
**Hauptstrasse 154**
**D-8752 Krombach(DE)**

(72) Erfinder: **Albert, Alfred**
**Hauptstrasse 154**
**D-8752 Krombach(DE)**

(54) **Fällungsmittel insbesondere zur Phosphatelimination in Abwässern.**

(57) Um den Wirkungsgrad eines Fällungsmittels mit einer Metallsalzhauptkomponente zu verbessern, weist das Fällungsmittel als Zusatzkomponente ein kationisches Polymer, vorzugsweise Diallyldimethylammoniumchlorid auf.

EP 0 354 401 A1

## Fällungsmittel, insbesondere zur Phosphatelimination in Abwässern

Die Erfindung betrifft ein Fällungsmittel, insbesondere zur Phosphatelimination in Abwässern. Es ist bekannt, daß übermäßige Gehalte von gelösten Phosphaten in Abwässern durch Fällung mit Eisenchlorid, Aluminiumchlorid, Aluminiumsulfat oder Kalkmilch beseitigt werden können.

Die Aufgabe der Erfindung ist es, den Wirkungsgrad der Fällungsmittel zu verbessern.
Diese Aufgabe wird durch die kennzeichnenden Merkmale des Anspruches 1 gelöst.
Durch die vorgeschlagene Zugabe von einem kationischen Homo-oder Copolymer zu einem dreiwertigen Metallsalz wird überraschend eine wesentlich größere Elimination (> 40%) von Phosphaten erreicht, wodurch einerseits die Menge des eingesetzten Fällungsmittel entsprechend reduziert werden kann und dadurch auch der Anteil der Anionen (Chloride, Sulfate) im gereinigten Abwasser wesentlich verringert ist. Darüberhinaus wird durch die Erfindung erreicht, daß die entstehende Schlammenge reduziert ist. Als Hauptkomponente wird vorzugsweise Polyaluminiumchlorid (PAC) oder ein hochbasisches Polyaluminiumchlorid (HBPAC) eingesetzt. Das kationische Polymer kann POLYETHYLENIMIN (PEI), POLY (2-HYDROXY-PROPYL-1,1-N-DIMETHYLAMMONIUMCHLORID), POLY [N-(DIMETHYL-AMINOMETHYL) ACRYL-AMID], , COPOLYMER aus ACRYLAMID und N.N-DIMETHYL-AMINOPROPYLMETH ACRYLAT sein. Besonders vorteilhaftist eine Zusatzkomponente aus Diallyldimethylammoniumchlorid (DADMAC).

Das Fällungsmittel nach der Erfindung kann durch Mischung von entsprechend pulverförmigen Vorprodukten hergestellt werden, wobei das neue Pulver über bekannte Einrichtungen dem zu reinigenden Abwasser zugeführt wird.

Besonders gute Ergebnisse werden bei der Phosphatelimination erreicht, wenn das neue Fällungsmittel in flüssiger Form über entsprechende Dosieranlagen dem Abwasser zugegeben wird.

Ein, auch über einen längeren Zeitraum stabiles und sich nicht entmischendes flüssiges Fällungsmittel wird vorteilhaft durch Mischung einer wässerigen Lösung mit 50%igem $Al_2$ $(OH_5)$ Cl Anteil und einer wässerigen Lösung mit 0,2-10, vorzugsweise 2-5 %igen Diallyldimethylammoniumchlorid Anteil erreicht.

## Ansprüche

1. Fällungsmittel, insbesondere zur Phosphatelimination in Abwässern, dadurch gekennzeichnet, daß das Fällungsmittel als Hauptkomponente ein dreiwertiges Metallsalz (Me+++) vorzugsweise Eisen- bzw. Aluminiumsalz und als Zusatzkomponente ein kationisches Homo- oder Copolymer aufweist.

2. Fällungsmittel nach Anspruch 1, dadurch gekennzeichnet, daß die Hauptkomponente Polyaluminiumchlorid entsprechend der Formel $Al_2$ $(OH)_n$ $Cl_{6-n}$ ist, wobei vorzugsweise n = 5 beträgt.

3. Fällungsmittel nach einem der Ansprüche 1 bis 2, dadurch gekennzeichnet, daß die Zusatzkomponente ein Homo-oder Copolymer des Diallylmethylammoniumchlorid ist, entsprechend der Strukturformel

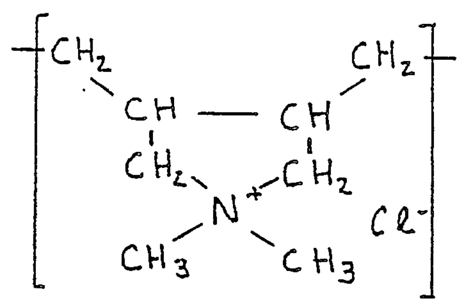

4. Fällungsmittel nach einem der Ansprüche 1-3. dadurch gekennzeichnet, daß das Fällungsmittel flüssig ist und vorzugsweise durch Mischung einer wässerigen Lösung mit 50%igem $Al_2$ $(OH_5)$ Cl Anteil und einer wässerigen Lösung mit 0,2-10, vorzugsweise 2-5%igem Diallyldimethylammoniumchlorid hergestellt wird.

Europäisches Patentamt

# EUROPÄISCHER RECHERCHENBERICHT

Nummer der Anmeldung

EP 89 11 3565

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 443 889 (ALLIED COLLOIDS)<br>* Seite 23, Anspruch 1; Seite 25, Anspruch 8; Seite 4, letzter Absatz; Seite 5, Absatz 1; Seite 7, Absatz 2 *<br>--- | 1 | C 02 F 1/52<br>C 02 F 1/56 |
| X | US-A-4 655 934 (NALCO CHEMICAL)<br>* Spalte 14, Ansprüche 1,2,6 *<br>--- | 1-3 | |
| X | US-A-4 708 814 (C.M. STEWART)<br>* Spalte 9, Ansprüche 1-5; Spalte 2, Zeilen 14-30; Spalte 4, Zeilen 29-31 *<br>----- | 1-4 | |
| | | | RECHERCHIERTE SACHGEBIETE (Int. Cl.5) |
| | | | C 02 F |

Der vorliegende Recherchenbericht wurde für alle Patentansprüche erstellt

| Recherchenort | Abschlußdatum der Recherche | Prüfer |
|---|---|---|
| DEN HAAG | 25-10-1989 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)